# EUROPÄISCHE PATENTSCHRIFT

(11) **EP 1 171 392 B1**
(45) Veröffentlichungstag und Bekanntmachung des Hinweises auf die Patenterteilung: **04.06.2003**
(21) Anmeldenummer: 00914158.1
(22) Anmeldetag: 22.03.2000
(51) Int. Cl.: C03B 29/02, C03B 29/00, C03B 29/08, C03B 32/00, C03B 23/025, C03B 23/035, C03B 37/029, C03B 5/235, C03B 5/42, C03B 5/033

(54) **VERFAHREN UND VORRICHTUNG ZUM HOMOGENEN ERWÄRMEN VON GLÄSERN UND/ODER GLASKERAMIKEN MIT HILFE VON INFRAROT-STRAHLUNG**
METHOD AND DEVICE FOR THE HOMOGENEOUS HEATING OF GLASS AND/OR GLASS-CERAMIC ARTICLES USING INFRARED RADIATION
PROCEDE ET DISPOSITIF POUR CHAUFFER DE MANIERE HOMOGENE DES VERRES ET/OU DES VITROCERAMIQUES PAR RAYONS INFRAROUGES

(30) Priorität: 23.03.1999 DE 29905385 U; 19.08.1999 DE 19938808
(43) Veröffentlichungstag der Anmeldung: 16.01.2002
(73) Patentinhaber: Schott Glas, 55122 Mainz (DE); CARL-ZEISS-STIFTUNG trading as SCHOTT GLASWERKE, 55122 Mainz (DE)
(72) Erfinder: FOTHERINGHAM, Ulrich, D-65191 Wiesbaden (DE); ESEMANN, Hauke, D-55286 Wörrstadt (DE); GARSCHE-ANDRES, Markus, D-55271 Stadecken-Elsheim (DE); HOPPE, Bernd, D-55218 Ingelheim (DE); BRINKMANN, Matthias, D-55270 Klein-Winternheim (DE); GREULICH-HICKMANN, Norbert, D-55127 Mainz (DE)
(74) Vertreter: Dr. Weitzel & Partner
(86) Internationale Anmeldenummer: EP0002507
(87) Internationale Veröffentlichungsnummer: WO00056675

(56) Entgegenhaltungen:
- EP-A- 0 058 529
- EP-A- 0 112 224
- EP-A- 0 317 409
- EP-A- 0 376 509
- WO-A-98/57899
- DE-A- 2 432 538
- DE-B- 1 024 684
- DE-C- 740 892
- DE-C- 807 132
- FR-A- 802 598
- FR-A- 2 267 987
- FR-A- 2 386 492
- FR-A- 2 505 472
- FR-A- 2 606 866
- GB-A- 729 072
- GB-A- 2 320 021
- SU-A- 560 841
- SU-A- 660 949
- US-A- 1 630 724
- US-A- 1 953 023
- US-A- 2 125 912
- US-A- 2 131 873
- US-A- 2 973 190
- US-A- 3 045 994
- US-A- 3 120 433
- US-A- 3 193 367
- US-A- 4 983 202

## Beschreibung

Die Erfindung betrifft ein Verfahren zum homogenen Erwärmen von semitransparenten und/oder transparenten Gläsern und/oder Glaskeramiken mit Hilfe von Infrarot-Strahlung, wodurch die Gläser und/oder Glaskeramiken einer Wärmebehandlung, im Bereich von 20° C bis 3000° C unterzogen werden, sowie eine Vorrichtung zum homogenen Erwärmen von semitransparenten und/oder transparenten Gläsern und/oder Glaskeramiken.

Semitransparentes bzw. transparentes Glas und/oder Glaskeramiken werden zum Einstellen von bestimmten Materialeigenschaften, beispielsweise der Keramisierung meist auf Temperaturen erwärmt, die vorzugsweise über dem unteren Kühlpunkt (Viskosität η=10^{14,5} dPas) liegen. Bei formgebenden Prozessen, insbesondere der Heißnachverarbeitung, wird das semitransparente bzw. transparente Glas und/oder die Glaskeramik bis zum Verarbeitungspunkt (Viskosität η=10⁴ dpas) oder darüber hinaus erwärmt. Typische untere Kühlpunkte können je nach Glasart zwischen 282° C und 790° C, und typischerweise der Verarbeitungspunkt bis zu 1705° C betragen.

Bislang wurden semitransparente bzw. transparente Gläser und/oder Glaskeramiken beispielsweise zur Keramisierung nach dem Stand der Technik vorzugsweise mit Oberflächenheizungen erwärmt. Als Oberflächenheizung werden solche Verfahren bezeichnet, bei denen mindestens 50 % der gesamten Wärmeleistung der Heizquelle in die Oberfläche bzw. oberflächennahen Schichten des zu erwärmenden Objektes eingetragen werden.

Ist die Strahlungsquelle schwarz oder grau und weist sie eine Farbtemperatur von 1500 K auf, so strahlt die Quelle 51 % der Gesamtstrahlungsleistung in einem Wellenlängenbereich über 2,7 µm ab. Beträgt die Farbtemperatur weniger als 1500 K, wie bei den meisten elektrischen Widerstandsheizelementen, so wird noch wesentlich mehr als 51 % der Strahlungsleistung oberhalb von 2,7 µm abgegeben.

Da die meisten Gläser in diesem Wellenlängenbereich eine Absorptionskante aufweisen, wird 50 % oder mehr der Strahlungsleistung von der Oberfläche oder in oberflächennahen Schichten absorbiert. Es kann somit von Oberflächenheizungen gesprochen werden. Eine andere Möglichkeit besteht in der Erwärmung von Glas und Glaskeramiken mit einer Gasflamme, wobei typische Flammtemperaturen bei 1000° C liegen. Eine derartige Erwärmung erfolgt zum größten Teil durch direkte Übertragung der Wärmeenergie des heißen Gases an die Oberfläche des Glases oder der Glaskeramik, so daß hier von einer überwiegenden Oberflächenheizung ausgegangen werden kann.

Im allgemeinen werden bei den zuvor beschriebenen Oberflächenheizungen die Oberfläche bzw. oberflächennahe Schichten an den Stellen des Glases oder der Glaskeramik erwärmt, die der Heizquelle gegenüber liegen. Das übrige Glasvolumen beziehungsweise Glaskeramikvolumen muß somit entsprechend durch Wärmeleitung innerhalb des Glases oder der Glaskeramik aufgeheizt werden.

Da Glas bzw. Glaskeramik in der Regel eine sehr geringe Wärmeleitfähigkeit im Bereich von 1 W / (m K) aufweist, muß Glas bzw. Glaskeramik mit steigender Materialdicke immer langsamer aufgeheizt werden, um Spannungen im Glas bzw. der Glaskeramik klein zu halten.

Ein weiterer Nachteil bekannter Systeme ist, daß, um eine homogene Aufheizung der Oberfläche zu erzielen, die Oberfläche des Glases oder der Glaskeramik möglichst vollständig mit Heizelementen bedeckt sein muß.

Herkömmlichen Beheizungsverfahren sind dabei Grenzen gesetzt. Mit elektrischen Widerstandsheizungen aus Kanthaldrähten, wie sie vorzugsweise eingesetzt werden, ist beispielsweise bei 1000° C nur eine Wandbelastung von maximal 60 kW/m² möglich, während ein vollflächiger schwarzer Strahler derselben Temperatur eine Leistungsdichte von 149 kW/m² abstrahlen könnte. Bei einer dichteren Packung der Heizelemente, gleichzusetzen mit einer höheren Wandbelastung, würden diese sich selbst gegenseitig aufheizen, was durch den resultierenden Wärmestau eine extreme Verkürzung der Lebensdauer der Heizelemente nach sich ziehen würde.

Wenn eine homogene Aufheizung des Glases oder der Glaskeramik nicht oder nur unzureichend gelingt, so hat dies unweigerlich Ungleichmäßigkeiten beim Prozeß und/oder der Produktqualität zur Folge. Beispielsweise führt jede Irregularität in der Prozeßführung beim Keramisierungsprozeß von Glaskeramiken zu einem Durchbiegen oder Ausplatzen der Glaskeramik.

Aus der DE 42 02 944 C2 ist ein Verfahren und eine Vorrichtung umfassend IR-Strahler zum schnellen Erwärmen von Materialien, die oberhalb von 2500 nm eine hohe Absorption aufweisen, bekanntgeworden. Um die von den IR-Strahlern abgegebene Wärme in das Material schnell eintragen zu können, weist die aus der DE 42 02 944 C2 bekannte Vorrichtung zur Erwärmung von Materialien einen Strahlungswandler auf, aus dem Sekundärstrahlung mit einem Wellenlängenbereich emittiert wird, der gegenüber der Primärstrahlung ins Langwellige verschoben ist. Während die Primärstrahlung vom zu erwärmenden Gegenstand nur zu einem geringen Teil absorbiert wird, weist die vom Strahlungswandler emittierte Sekundärstrahlung einen Wellenlängenbereich auf, der von dem zu erwärmenden Gegenstand gut absorbiert wird.

Eine in der Tiefe homogene Erwärmung von transparentem Glas unter Verwendung kurzwelliger IR-Strahler beschreibt die US-A-3620706. Das Verfahren gemäß der US-A-3620706 beruht darauf, daß die Absorptionslänge der verwendeten Strahlung im Glas sehr viel größer ist als die Abmessungen der zu erwärmenden Glasgegenstände, so daß der größte Teil der auftreffenden Strahlung vom Glas hindurchgelassen wird und die absorbierte Energie pro Volumen an jedem Punkt des Glaskörpers nahezu gleich ist. Nachteilig an diesem Verfahren ist jedoch, daß keine über die Fläche homogene Bestrahlung der Glasgegenstände gewährleistet ist, so daß die Intensitätsverteilung der IR-Strahlungsquelle auf dem zu erwärmenden Glas abgebildet wird. Zudem wird bei diesem Verfahren nur ein geringer Teil der eingesetzten elektrischen Energie zur Erwärmung des Glases ausgenutzt.

Aus der GB-A-729 072 ist eine Ofenanordnung zur Beheizung von Metallen, Keramiken und Gläsern bekanntgeworden, wobei es sich bei der Erwärmung des zu erwärmenden Gutes um eine reine Oberflächenerwärmung handelt. Die in der GB-A-729 072 beschriebenen Reflektoren dienen lediglich dazu, Infrarot-Strahlung gerichtet auf die Oberfläche des zu erwärmenden Gutes zu reflektieren.

Auch bei den in der US-A-2,125,912 beschriebenen Öfen erfolgt eine Erwärmung der eingelegten Substanzen über deren Oberfläche.

Aufgabe der Erfindung ist es somit ein Verfahren und eine Vorrichtung zur homogenen Aufheizung von semitransparenten beziehungsweise transparenten Gläsern und Glaskeramiken anzugeben, mit dem die zuvor beschriebenen Nachteile überwunden werden.

Erfindungsgemäß wird die Aufgabe dadurch gelöst, daß bei einem Verfahren zum homogenen Erwärmen von semitransparenten und/oder transparenten Gläsern und/oder Glaskeramiken mit Hilfe von Infrarot-Strahlem die Erwärmung des semitransparenten und/oder transparenten Glases bzw. Glaskeramik durch einen Anteil direkt auf die Gläser und/oder Glaskeramik einwirkender Infrarot-Strahlung sowie einen Anteil indirekt auf die Gläser und/oder Glaskeramik einwirkender Infrarot-Strahlung erreicht wird, wobei der Anteil der indirekt auf das Glas beziehungsweise die Glaskeramik einwirkenden Strahlung mehr als 50 %, bevorzugt mehr als 60 %, bevorzugt mehr als 70 %, besonders bevorzugt mehr als 80 %, besonders bevorzugt mehr als 90 %, insbesondere mehr als 98 % der Gesamtstrahlungsleistung beträgt.

Die bei dem erfindungsgemäßen Verfahren eingesetzte Infrarot-Strahlung ist kurzwellige Infrarot-Strahlung mit einer Farbtemperatur größer als 1500 K, besonders bevorzugt größer als 2000 K, ganz bevorzugt größer als 2400 K, insbesondere größer als 2700 K, insbesondere bevorzugt größer als 3000 K.

In einer ersten Ausgestaltung der Erfindung ist vorgesehen, daß die indirekt auf die Gläser und/oder Glaskeramik einwirkende Infrarot-Strahlung mindestens einen Anteil reflektierter und/oder gestreuter, insbesondere diffus gestreuter Strahlung umfaßt. Vorteilhafterweise beträgt der Anteil der kurzwelligen Infrarot-Strahlung, der vom Glas beziehungsweise der Glaskeramik beim einmaligen Auftreffen nicht absorbiert wird, d.h. reflektiert, gestreut oder durchgelassen wird, im Mittel mehr als 50 % der von den IR-Strahlern abgegebenen Gesamt Strahlungsleistung.

Will man beispielsweise langsam kühlen oder schnell aufheizen, so ist in einer vorteilhaften Ausgestaltung der Erfindung vorgesehen, daß das Verfahren in einem umgrenzten Raum, vorzugsweise einem lR-Strahlungshohlraum, durchgeführt wird. In einer besonders vorteilhaften Ausgestaltung eines derartigen Verfahrens ist vorgesehen, daß die reflektierte und/oder gestreute Infrarot-Strahlung von mindestens einem Teil der Wand-, Boden- und/oder Deckenflächen reflektiert und/oder gestreut wird. IR-Strahlungshohlräume zeigen beispielsweise die US-A-4789771 sowie die EP-A-0 133 847, deren Offenbarungsgehalt in die vorliegende Anmeldung vollumfänglich miteinbezogen wird. Vorzugsweise beträgt der Anteil der von dem Teil der Wand-, Boden- und/oder Deckenflächen reflektierten und/oder gestreuten Infrarot-Strahlung mehr als 50 % der auf diese Flächen auftreffenden Strahlung.

Besonders bevorzugt ist es, wenn der Anteil der von dem Teil der Wand-,Boden- und/oder Deckenflächen reflektierten und/oder gestreuten Infrarot-Strahlung mehr als 90 %, beziehungsweise 95 %, insbesondere mehr als 98 %, beträgt.

Ein besonderer Vorteil der Verwendung eines IR-Strahlungshohlraumes ist des weiteren, daß es sich bei Verwendung von sehr stark reflektierenden beziehungsweise rückstreuenden Wand-, Boden- und/oder Deckenmaterialien um einen Resonator hoher Güte Q handelt, der nur mit geringen Verlusten behaftet ist und daher eine hohe Energieausnutzung gewährleistet.

In einer alternativen Ausgestaltung der Erfindung ist vorgesehen, daß die indirekt auf die Gläser und/oder Glaskeramik einwirkende Infrarot-Strahlung einen Anteil von Infrarot-Strahlung umfaßt, der von einem Trägerkörper absorbiert, in Wärme umgewandelt und an das thermisch mit dem Trägerkörper verbundene Glas und/oder die Glaskeramik abgegeben wird.

In einer ersten Ausgestaltung dieser Alternative ist vorgesehen, daß als Trägerkörper Keramikplatten verwendet werden.

Besonders vorteilhaft ist es, wenn es sich bei dem Trägerkörper um einen hochwärmeleitfähigen Trägerkörper möglichst hoher Emissivität, vorzugsweise aus SiSiC in Form von Scheiben handelt.

Besonders bevorzugt ist die Wärmeleitfähigkeit des Trägerkörpers im Bereich der Wärmebehandlungstemperatur mindestens fünfmal so groß wie die des zu behandelnden Glases oder der Glaskeramik.

Neben dem Verfahren stellt die Erfindung auch eine Vorrichtung gemäß Anspruch 14 zum Durchführen des Verfahrens zur Verfügung. Die erfindungsgemäße Vorrichtung zeichnet sich u.a. dadurch aus, daß Mittel zur Reflektierung und/oder Streuung der nicht durch die Gläser und/oder Glaskeramiken absorbierten Infrarot-Strahlung der infrarot-Strahlungsquellen und damit zur Erzeugung von indirekt auf die Gläser und/oder Glaskeramiken einwirkender Infrarot-Strahlung derselben Wellenlänge wie die der Infrarot-Strahlungsquellen vorgesehen sind, die derart angeordnet und beschaffen sind, daß der Anteil der indirekt auf das Glas und/oder die Glaskeramik einwirkenden Strahlung mehr als 50 % der Gesamtstrahlungsleistung beträgt.

In einer ersten Ausgestaltung der Erfindung ist vorgesehen, daß die Mittel zur Erzeugung von indirekt auf die Gläser und/oder Glaskeramiken einwirkende Infrarot-Strahlung Reflektoren und/oder Diffusoren zur Reflexion beziehungsweise Streuung von Infrarot-Strahlung umfassen.

Als diffus rückstreuendes Material finden beispielsweise geschliffene Quarzal-Ptatten mit beispielsweise einer Dicke von 30 mm Verwendung.

Auch andere die IR-Strahlung reflektierende beziehungsweise rückstreuende Materialien sind möglich, beispielsweise eine oder mehrere der nachfolgenden Materialien:
Al₂O₃; BaF₂; BaTiO₃; CaF₂; CaTiO₃;
MgO 3,5 Al₂O₃; MgO, SrF₂; SiO₂;
SrTiO₃; TiO₂; Spinell; Cordierit;
Cordierit-Sinterglaskeramik

Strebt man ein schnelles Heizen oder eine langsame Kühlung an, so ist mit Vorteil vorgesehen, die Vorrichtung in einem umgrenzten Raum, insbesondere einem IR-Strahlungshohlraum, unterzubringen.

In einer besonderen Ausgestaltung der Erfindung ist vorgesehen, daß die Oberfläche der Wände, des Bodens und/oder der Decke des umgrenzten Raumes, vorzugsweise des lR-Strahlungshohlraumes, die Reflektoren beziehungsweise Diffusoren umfaßt.

Eine Ausgestaltung eines Diffusors wäre beispielsweise eine Streuscheibe.

Besonders bevorzugt ist es, wenn die Reflektoren beziehungsweise Diffusoren derart ausgestaltet sind, daß mehr als 50 % der auf diese Flächen auftreffenden Strahlung reflektiert beziehungsweise gestreut werden.

In einer alternativen Ausführungsform ist vorgesehen, daß die Mittel zur Erzeugung von indirekter Strahlung einen Trägerkörper umfassen, der in thermischem Kontakt mit den zu erwärmenden Gläsern und/oder Glaskeramiken steht und einen Anteil der indirekten Infrarot-Strahlung absorbiert.

Besonders bevorzugt ist es, wenn der Trägerkörper Keramikplatten, vorzugsweise aus SiSiC umfaßt und die Emissivität des Trägerkörpers größer als 0,5 ist. SiSiC weist eine hohe Wärmeleitfähigkeit sowie niedrige Porosität auf sowie eine geringe Klebeneigung gegenüber Glas. Die niedrige Porosität hat zur Folge, daß sich nur wenige unerwünschte Partikel in den Poren sammeln können. Daher ist SiSiC für Arbeiten im direkten Kontakt mit Glas besonders geeignet.

In einer besonders vorteilhaften Ausgestaltung ist vorgesehen, daß die Wärmeleitfähigkeit des Trägerkörpers im Bereich der Wärmebehandlungstemperatur mindestens fünfmal so groß ist, wie die des zu behandelnden Glases oder der Glaskeramik.

Die Erfindung soll nachfolgend beispielhaft anhand der Figuren sowie der Ausführungsbeispiele beschrieben werden.

Es zeigen:
- Figur 1: den Transmissionsverlauf bei einer Dicke von 1 cm eines typischen zu erwärmenden Glases.
- Figur 2: die Planck-Kurve des verwendeten IR-Strahlers mit einer Temperatur von 2400 K.
- Figur 3A: den prinzipiellen Aufbau einer Heizvorrichtung mit Strahlungshohlraum.
- Figur 3B: die Remissionskurve über der Wellenlänge von Al₂O₃ Sintox Al der Morgan Matroc, Troisdorf, mit einem Remissionsgrad > 95 % im nahen IR-Wellenlängenbereich.
- Figur 4: die Aufheizkurve eines Glases in einer Heizvorrichtung umfassend Diffusoren und Reflektoren.
- Figur 5: die Aufheizkurve eines Glases in einer Vorrichtung mit einem absorbierenden Trägerkörper.

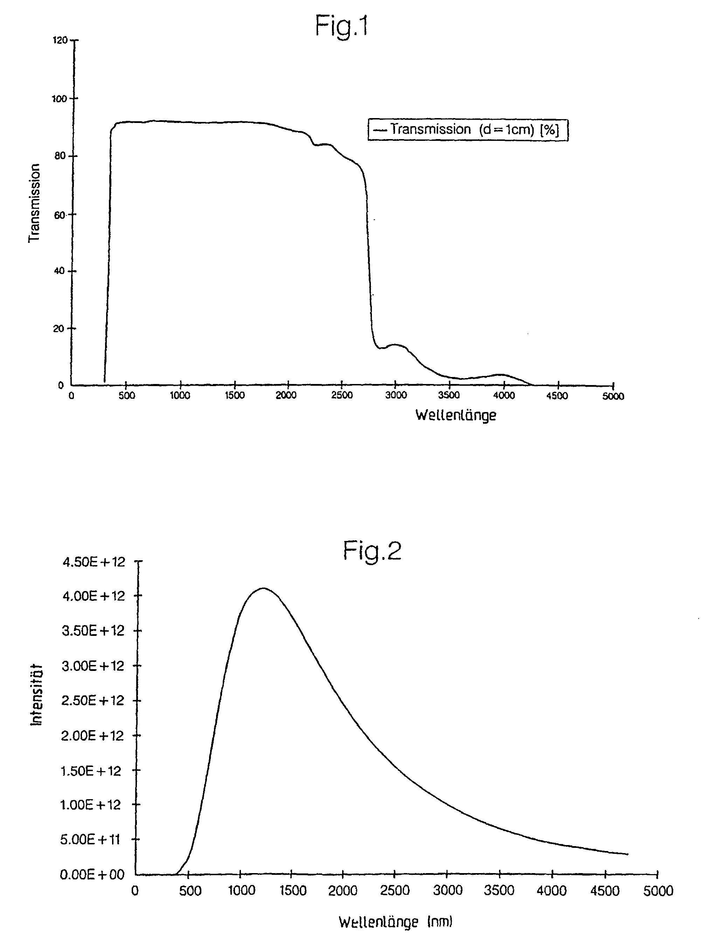

Figur 1 zeigt die Transmissionskurve über der Wellenlänge des für die Vergleichsversuche der vorliegenden Erfindung verwendeten Glases. Das Glas weist eine Dicke von 10 mm auf. Deutlich zu erkennen ist die typische Absorptionskante bei 2,7 µm, über der Glas oder Glaskeramiken opak sind, so daß die gesamte auftreffende Strahlung an der Oberfläche bzw. in den oberflächennahen Schichten absorbiert wird.

Figur 2 zeigt die Intensitätsverteilung der vorzugsweise zum Einsatz gelangenden IR-Strahlungsquelle. Die zur Anwendung gelangenden IR-Strahler sind lineare Halogen IR-Quarzrohrstrahler mit einer Nennleistung von 2000 W bei einer Spannung von 230 V, welche eine Farbtemperatur von 2400 K besitzen. Die IR-Strahler haben entsprechend dem Wienschen Verschiebungsgesetz ihr Strahlungsmaximum bei einer Wellenlänge von 1210 nm.

Die Intensitätsverteilung der lR-Strahlungsquellen ergibt sich entsprechend aus der Planck-Funktion eines schwarzen Körpers mit einer Temperatur von 2400 K. So folgt, daß eine nennenswerte Intensität, das heißt größer als 5 % des Strahlungsmaximums, im Wellenlängenbereich von 500 bis 5000 nm abgestrahlt wird und insgesamt ca. 75 % der gesamten Strahlungsleistung auf den Bereich über 1210 nm Wellenlänge entfallen.

In einer ersten Ausführungsform der Erfindung wird nur das Glühgut erwärmt, während die Umgebung kalt bleibt. Die am Glühgut vorbeigehende Strahlung wird durch Reflektoren oder diffuse Streuer oder diffuse Rückstreuer auf das Glühgut gelenkt. Im Falle hoher Leistungsdichten und vorzugsweise metallischer Reflektoren, sind die Reflektoren wassergekühlt, da das Reflektormaterial ansonsten anlaufen würde. Diese Gefahr besteht insbesondere bei Aluminium, das wegen seiner guten Reflexionseigenschaften im kurzwelligen IR-Bereich gerne für Strahler besonders großer Strahlungsleistung verwendet wird. Alternativ zu metallischen Reflektoren können diffus rückstreuende keramische Diffusoren oder partiell reflektierende und partiell rückstreuende glasierte keramische Reflektoren, beispielsweise Al₂O₃, verwendet werden.

Ein Aufbau, bei dem nur das Glühgut erwärmt wird, kann nur dann angewandt werden, wenn nach dem Aufheizen keine langsame Kühlung erforderlich ist, die ohne isolierenden Raum nur mit ständigem Nachheizen und nur mit sehr großem Aufwand mit einer akzeptablen Temperaturhomogenität darstellbar ist.

Der Vorteil eines derartigen Aufbaus ist aber die leichte Zugänglichkeit des Glühgutes, beispielsweise für einen Greifer, was insbesondere bei der Heißformgebung von großem Interesse ist.

In einer alternativen Ausführungsform befindet sich die Heizeinrichtung und das Glühgut in einem mit IR-Strahlern bestückten IR-Strahlungshohiraum. Das setzt voraus, daß die Quarzglasstrahler selbst genügend temperaturbeständig sind oder gekühlt werden. Das Quarzglasrohr ist bis etwa 1100° C einsetzbar. Bevorzugt ist es, die Quarzglasrohre erheblich länger auszubilden als die Heizwendel und aus dem Heißbereich herauszuführen, so daß die Anschlüsse im Kaltbereich sind, um die elektrischen Anschlüssen nicht zu überhitzen. Die Quarzglasrohre können mit und ohne Beschichtung ausgeführt sein.

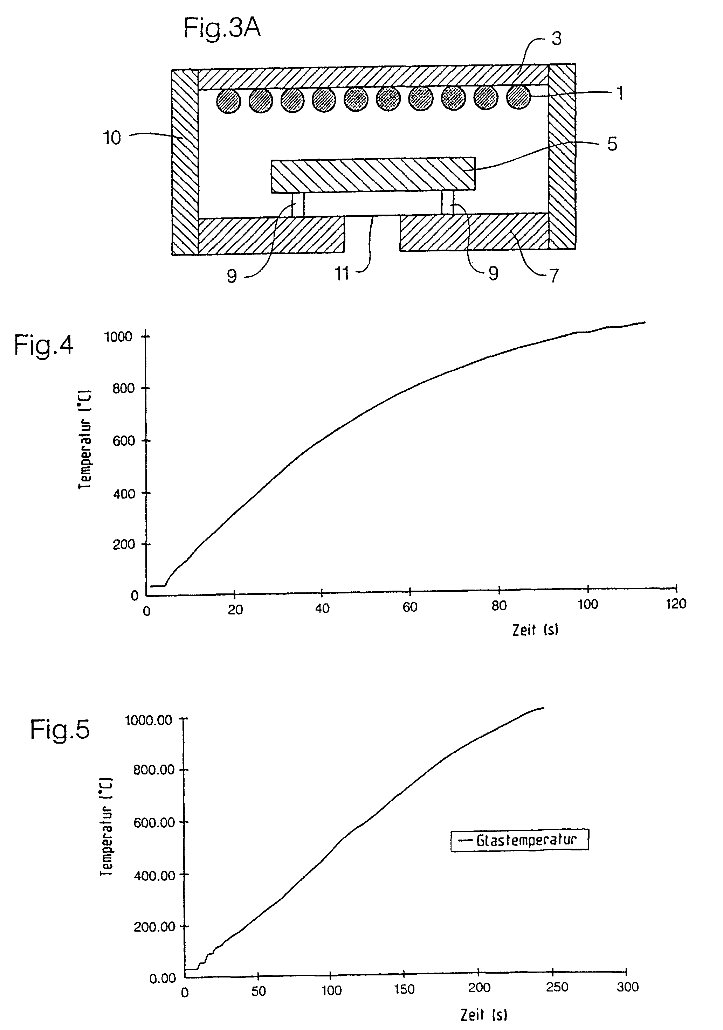

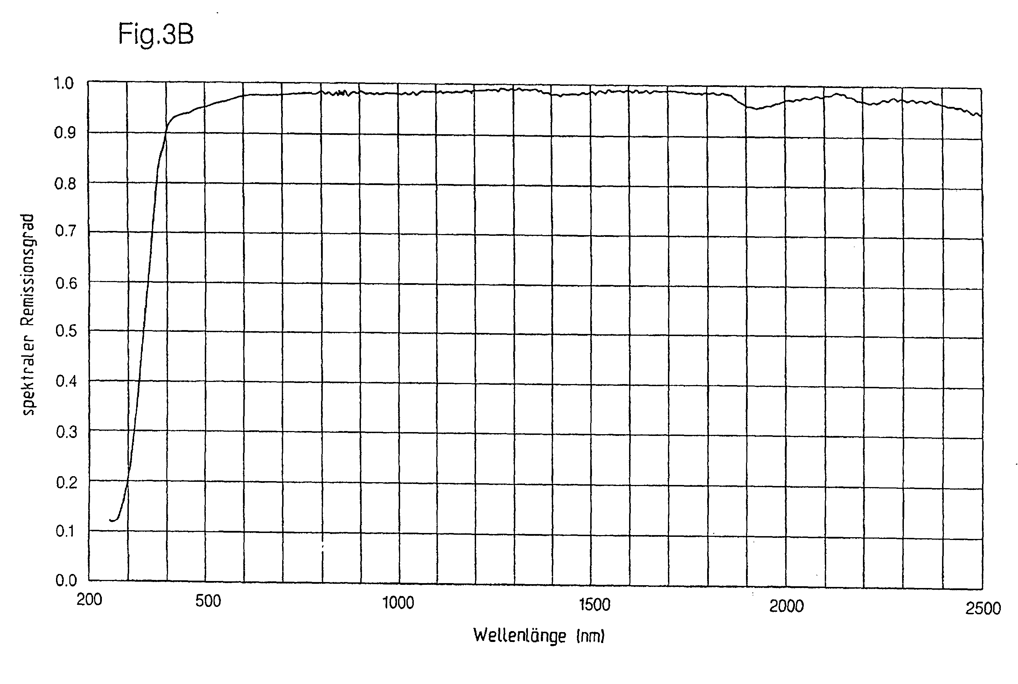

In Figur 3A ist eine Ausführungsform einer erfindungsgemäßen Heizvorrichtung mit einem IR-Stahlungshohlraum dargestellt mit der die Durchführung des erfindungsgemäßen Verfahrens möglich ist, ohne daß die Erfindung hierauf beschränkt wäre.

Die in Figur 3A dargestellte Heizvorrichtung umfaßt eine Vielzahl von IR-Strahlern 1, die unterhalb eines Reflektors 3 aus stark reflektierendem oder diffus rückstreuendem Material angeordnet sind. Durch den Reflektor 3 wird erreicht, daß das zu erwärmende Glas bzw. Glaskeramik 5 von der Oberseite erhitzt wird. Die von den lR-Strahlern abgegebene IR-Strahlung durchdringt die in diesem Wellenlängenbereich weitgehend transparente Glas beziehungsweise die Glaskeramik 5 und trifft auf eine Trägerplatte 7 aus stark reflektierendem beziehungsweise stark streuendem Material. Besonders geeignet hierfür ist Quarzal, das auch im Infraroten ungefähr 90 % der auftreffenden Strahlung rückstreut. Alternativ hierzu könnte auch hochreines, gesintertes Al₂O₃ Verwendung finden, das einen Rückstreu-, d. h. Remissionsgrad von ungefähr 98 % bei hinreichender Dicke aufweist. Auf die Trägerplatte 7 wird das Glas bzw. die Glaskeramik 5 mit Hilfe von beispielsweise Quarzal- oder Al₂O₃-Streifen 9 aufgesetzt. Die Temperatur der Glas- bzw. Glaskeramikunterseite kann durch ein Loch 11 in der Trägerplatte mittels eines nicht dargestellten Pyrometers gemessen werden.

Die Wände 10 können zusammen mit Reflektor 3 als Decke und Trägerplatte 7 als Boden bei entsprechender Ausgestaltung mit reflektierendem Material, beispielsweise Quarzal oder Al₂O₃, einen IR-Strahlungshohlraum hoher Güte ausbilden.

Figur 4 zeigt die Heizkurve eines Borosilicatglases gemäß einem erfindungsgemäßen Verfahren, wobei die Glasprobe Abmessungen von etwa 100 mm bei einer Dicke von 3 mm aufwies.

Das Heizverfahren beziehungsweise die Wärmebehandlung erfolgte wie nachfolgend beschrieben:

Die Erwärmung der Glasproben erfolgte zunächst in einem mit Quarzal umbauten IR-Strahlungshohlraum gemäß Fig. 3A, dessen Decke durch einen Aluminiumreflektor mit darunter befindlichen IR-Strahlern gebildet wurde. Die Glasproben beziehungsweise Glaskeramikkörper wurden in geeigneter Art und Weise auf Quarzal gelagert.

Im lR-Strahlungshohlraum wurde das Glas oder die Glaskeramik durch mehrere Halogen IR-Strahler direkt angestrahlt, die sich in einem Abstand von 10 mm bis 150 mm über dem Glas oder der Glaskeramik befanden.

Das Aufheizen des Glases oder der Glaskeramik fand nunmehr mittels Ansteuerung der IR-Strahler über einen Thyristorsteller auf Grundlage von Absorptions-, Reflexions- und Streuprozessen statt, wie nachfolgend eingehend beschrieben:

Da die Absorptionslänge der verwendeten kurzwelligen IR-Strahlung im Glas beziehungsweise in der Glaskeramik sehr viel größer ist als die Abmessungen der zu erwärmenden Gegenstände, wird der größte Teil der auftreffenden Strahlung durch die Probe hindurchgelassen. Da andererseits die absorbierte Energie pro Volumen an jedem Punkt des Glas- beziehungsweise Glaskeramikkörpers nahezu gleich ist, wird eine über das gesamte Volumen homogene Erwärmung erzielt. Bei dem Verfahren gemäß Figur 4 befinden sich die IR-Strahler und das zu erwärmende Glas in einem Hohlraum, dessen Wände und/oder Decke und/oder Boden aus einem Material mit einer Oberfläche hoher Reflektivität beziehungsweise hohem Rückstreuvermögen besteht, wobei zumindest ein Teil der Wand-, Boden-, und/oder Deckenfläche die auftreffende Strahlung überwiegend diffus zurückstreut. Dadurch gelangt der überwiegende Teil der zunächst von dem Glas beziehungsweise der Glaskeramik hindurchgelassenen Strahlung nach Reflexion beziehungsweise Streuung an der Wand, Decke und/oder Boden erneut in den zu erwärmenden Gegenstand und wird wiederum teilweise absorbiert. Der Weg der auch beim zweiten Durchgang durch das Glas beziehungsweise die Glaskeramik hindurchgelassenen Strahlung setzt sich analog fort. Mit diesem Verfahren wird nicht nur eine in der Tiefe homogene Erwärmung erreicht, sondern auch die eingesetzte Energie deutlich besser als bei nur einfachem Durchgang durch das Glas beziehungsweise die Glaskeramik ausgenutzt. Besonders bevorzugt für das hier beschriebene Verfahren ist außerdem, daß zumindest von einem Teil der Wand-, Boden- und/oder Deckenfläche die auftreffende Strahlung nicht gerichtet reflektiert, sondern diffus zurückgestreut wird. Dadurch gelangt Strahlung aus allen Richtungen und unter allen möglichen Winkeln in das Glas beziehungsweise die Glaskeramik, so daß die Erwärmung zugleich auch über die Fläche homogen erfolgt und eine Abbildung der Intensitätsverteilung der Strahlungsquelle auf die zu erwärmenden Gegenstände, wie bislang im Stand der Technik, nicht erfolgt.

Figur 5 zeigt die Heizkurve eines Glases gemäß einem alternativen erfindungsgemäßen Verfahren mit absobierendem Trägerkörper. Der Durchmesser des Glases betrug 100 mm bei einer Dicke von 10 mm.

Die Erwärmung erfolgte wie nachfolgend beschrieben:

Zunächst wurde die Glasprobe außerhalb des Strahlungshohlraumes auf einen Trägerkörper aus SiSiC mit einer Dicke von 5 mm aufgebracht. Anschließend wird der Träger aus SiSiC in einen mit Quarzal umbauten IR-Strahlungshohlraume eingebracht.

Im Anschluß wird das Glas oder die Glaskeramik mit einem oder entsprechend der Geometrie des Glases oder der Glaskeramik auch mehreren Halogen IR-Strahlern direkt angestrahlt, die sich in einem Reflektor über dem Glas oder der Glaskeramik in einem Abstand von 10 mm bis 150 mm befinden.

Das Aufheizen des Glases oder der Glaskeramik findet nunmehr durch die Ansteuerung der IR-Strahler über einen Thyristorsteller durch eine Kombination von direkter und indirekter Erwärmung statt.

Bedingt durch die Transparenz des Glases oder der Glaskeramik wird ein erheblicher Anteil der Strahlungsleistung das Glas oder die Glaskeramik direkt auf den Träger durchstrahlen. Der schwarze SiSiC-Träger absorbiert nahezu die gesamte Strahlung und verteilt sie in Form von Wärme auf Grund seiner hohen Wärmeleitfähigkeit schnell und homogen über die gesamte Oberfläche des Trägers. Die Wärme des Trägers wird nun gleichermaßen homogen an das Glas oder die Glaskeramik abgegeben und erwärmt diese(s) von der Unterseite her. Dieser Vorgang stellt in vorliegendem Verfahren den indirekten Anteil der Aufheizung dar.

Der direkte Beitrag der Aufheizung untergliedert sich in zwei Bestandteile. Der erste Anteil ergibt sich daraus, daß bei allen Wellenlängen außerhalb des transparenten Bereichs, das Glas oder die Glaskeramik opak ist und damit die Strahlung lediglich die Oberfläche bzw. oberflächennahe Schichten erwärmen kann. Den zweiten Beitrag zur direkten Aufheizung liefert der gering absorbierte Teil der Strahlung, deren Wellenlänge in einem Bereich liegt, in welchem das Glas oder die Glaskeramik schwach absorbiert. Dieser Anteil führt zu einer Aufheizung von tieferen Schichten des Glases oder der Glaskeramik.

Der größte Teil der lR-Strahlung durchstrahlt jedoch das Glas und hat eine indirekte Aufheizung über den Träger zur Folge. Auch bei diesem Verfahren wird eine hohe Temperaturhomogenität über die Glasfläche hinweg erreicht und so ein Abbilden der Strahlungsquelle auf das Glas wie im Stand der Technik vermieden.

Erfindungsgemäß beträgt der indirekte Anteil der Aufheizung des Glases oder der Glaskeramik bei beiden in Fig. 4 und 5 beschriebenen Verfahren mehr als 50%.

Mit der Erfindung werden erstmals Verfahren und Vorrichtungen zum Erwärmen beziehungsweise unterstützenden oder ausschließlichen Beheizen von Gläsern beziehungsweise Glaskeramiken angegeben, die eine homogene Erwärmung derselben gewährleisten, eine hohe Energieausnutzung aufweisen sowie ein Abbilden der Strahlungsquelle auf den zu erwärmenden Gegenstand vermeiden. Das Verfahren und die Vorrichtung kann in einer Vielzahl von Gebieten der Glasverarbeitung eingesetzt werden. Nur beispielhaft und nicht abschließend seien die nachfolgenden Verwendungen des erfindungsgemäßen Verfahrens aufgeführt:
- das temperaturhomogenen Aufheizen von Glaskeramikrohlingen bei der Keramisierung
- das schnelle Wiedererwärmen von Glasrohlingen für eine nachfolgende Heißformgebung
- die homogenen Erwärmung von Faserbündeln auf Ziehtemperatur
- die unterstützende und ausschließliche Beheizung beim Gemengeeinschmelzen
- das Schmelzen und Läutern von Gläsern und/oder Glaskeramiken
- die unterstützende oder ausschließliche Beheizung bei der Formgebung, insbesondere beim Ziehen, beim Walzen, beim Gießen, beim Schleudern, beim Pressen, beim Blasen beim Blas-Blas-Verfahren,
   beim Blasen beim Preß-Blas-Verfahren,
   beim Blasen beim Ribbon-Verfahren, zur Flachglasherstellung sowie
   beim Floaten.
- die unterstützenden oder ausschließlichen Beheizung beim Kühlen, beim Verschmelzen, beim thermischen Verfestigen, beim Stabilisieren bzw. Feinkühlen zum Einstellen einer gewünschten fiktiven Temperatur, einer gewünschten Brechzahl, einer gewünschten Compaction bei anschließender Temperaturbehandlung, beim Altern von Thermometergläsern, beim Entmischen, beim Färben von Anlaufgläsern, beim gesteuerten Kristallisieren, beim Diffusionsbehandeln, insbesondere chemischen Verfestigen, beim Umformen, insbesondere Senken, Biegen, Verziehen, Verblasen, beim Trennen, insbesondere Abschmelzen, Brechen, Schränken, Sprengen, beim Schneiden, beim Fügen sowie beim Beschichten

## Patentansprüche

1. Verfahren zum homogenen Erwärmen von semitransparenten und/oder transparenten Gläsern und/oder Glaskeramiken mit Hilfe von Infrarot-Strahlung, wodurch die Gläser und/oder Glaskeramiken einer Wärmebehandlung im Bereich von 20° C bis 3000° C, insbesondere im Bereich von 20° C bis 1705° C, unterzogen werden, wobei die Erwärmung durch eines Anteil direkt auf die Gläser und/oder Glaskeramik einwirkender Infrarot-Strahlung sowie einen Anteil indirekt auf die Gläser und/oder Glaskeramik einwirkender Infrarot-Strahlung erreicht wird, wobei der Anteil der indirekt auf das Glas und/oder die Glaskeramiken einwirkenden Strahlung mehr als 50 % der Gesamtstrahlungsleistung beträgt und die Infrarot-Strahlung kurzwellige Infrarot-Strahlung einer IR-Strahlungsquelle ist, wobei die Farbtemperatur der IR-Strahlungsquelle größer als 1500 K; besonders bevorzugt größer als 2000 K ist.

2. Verfahren nach Anspruch 1, **dadurch gekennzeichnet, daß** die indirekt auf die Gläser und/oder Glaskeramik einwirkende Infrarot-Strahlung mindestens einen Anteil reflektierter und/oder gestreuter Strahlung umfaßt.

3. Verfahren nach einem der Ansprüche 1 bis 2, **dadurch gekennzeichnet, daß** im Mittel mehr als 50 % der von den IR-Strahlern abgegebenen Gesamtstrahlungsleistung an kurzwelliger Infrarot-Strahlung beim einmaligen Auftreffen auf das Glas nicht absorbiert werden.

4. Verfahren nach einem der Ansprüche 1 bis 3, **dadurch gekennzeichnet, daß** das Verfahren in einem umgrenzten Raum mit Wand, Boden und Decke, insbesondere einem IR-Strahlungshohlraum durchgeführt wird.

5. Verfahren nach Anspruch 4, **dadurch gekennzeichnet, daß**
die reflektierte und/oder gestreute Infrarot-Strahlung von mindestens einem Teil der Wand-, Boden- und/oder Deckenflächen reflektiert und/oder gestreut wird.

6. Verfahren nach Anspruch 5, **dadurch gekennzeichnet, daß**
der Anteil der von dem Teil der Wand-, Boden- und/oder Deckenflächen reflektierten und-/oder gestreuten Infrarot-Strahlung mehr als 50 % der auf diese Flächen treffenden Strahlung beträgt.

7. Verfahren nach Anspruch 5, **dadurch gekennzeichnet, daß** der Anteil der von dem Teil der Wand-, Boden- und/oder Deckenflächen reflektierten und/oder gestreuten Infrarot-Strahlung mehr als 90 %, beziehungsweise 95 %, insbesondere mehr als 98 %, beträgt.

8. Verfahren nach einem der Ansprüche 1 bis 7, **dadurch gekennzeichnet, daß** die indirekt auf die Gläser und/oder Glaskeramiken einwirkende Infrarot-Strahlung einen Anteil von Infrarot-Strahlung umfaßt, der von einem Trägerkörper absorbiert, in Wärme umgewandelt und an das thermisch mit dem Trägerkörper verbundene Glas und/oder die Glaskeramik abgegeben wird.

9. Verfahren nach Anspruch 8, **dadurch gekennzeichnet, daß** die Wärme an das thermisch mit dem Trägerkörper verbundene Glas und/oder Glaskeramik über Wärmestrahlung und/oder Wärmeleitung und/oder Konvektion übertragen wird.

10. Verfahren nach Anspruch 8 oder 9, **dadurch gekennzeichnet, daß**
als Trägerkörper Keramikplatten verwendet werden.

11. Verfahren nach einem der Ansprüche 8 bis 10, **dadurch gekennzeichnet, daß**
die Trägerkörper SiC, insbesondere SiSiC, umfassen.

12. Verfahren nach einem der Ansprüche 8 bis 11, **dadurch gekennzeichnet, daß** die Emissivität des Trägerkörpers größer als 0,5 ist.

13. Verfahren nach einem der Ansprüche 8 bis 12, **dadurch gekennzeichnet, daß** die Wärmeleitfähigkeit des Trägerkörpers im Bereich der Wärmebehandluhgstemperatur mindestens fünf mal so groß ist wie die des zu behandelnden Glases oder der Glaskeramik.

14. Vorrichtung zum homogenen Erwärmen von semitransparenten und/oder transparenten Gläsern und/oder Glaskeramiken mit Hilfe von Infrarot-Strahlung, wodurch die Gläser und/oder Glaskeramiken einer Wärmebehandlung im Bereich von 20° C bis 3000° C, insbesondere im Bereich von 20° C bis 1705° C unterzogen werden, mit
14.1 Infrarot-Strahlungsquellen (1) zur Emission kurzwelliger IR-Strahlung, wobei die Farbtemperatur der lR-Strahlungsquelle größer als 1500 K; besonders bevorzugt größer als 2000 K ist;
14.2 Mittel zur Reflektierung und/oder Streuung der nicht durch die Gläser und/oder Glaskeramiken absorbierten Infrarot-Strahlung der Infrarot-Strahlungsquellen und damit zur Erzeugung von indirekt auf die Gläser und/oder Glaskeramiken einwirkender Infrarot-Strahlung derselben Wellenlänge wie die der Infrarot-Strahlungsquellen; wobei
14.3 die Mittel zur Reflektierung und/oder Streuung der nicht durch die Gläser und/oder Glaskeramiken absorbierten Infrarot-Strahlung der Infrarot-Strahlungsquellen und damit zur Erzeugung von indirekt auf die Gläser und/oder Glaskeramiken einwirkender Infrarot-Strahlung derselben Wellenlänge wie die der Infrarot-Strahlungsquellen derart angeordnet und beschaffen sind, daß der Anteil der indirekt auf das Glas und/oder die Glaskeramik einwirkenden Strahlung mehr als 50 % der Gesamtstrahlungsleistung beträgt.

15. Vorrichtung nach Anspruch 14, **dadurch gekennzeichnet, daß**
die Mittel zur Erzeugung von indirekt auf die Gläser und/oder Glaskeramiken (5) einwirkender Infrarot-Strahlung Reflektoren (3) oder Diffusoren zur Reflexion beziehungsweise Streuung von Infrarot-Strahlung umfassen.

16. Vorrichtung nach einem der Ansprüche 14 bis 15, **dadurch gekennzeichnet, daß** die Vorrichtung einen umgrenzten Raum, mit Wänden, Boden und Decke, insbesondere einen IR-Strahlungshohlraum umfaßt.

17. Vorrichtung nach Anspruch 16, **dadurch gekennzeichnet, daß**
die Oberfläche der Wände und/oder des Bodens und/oder der Decke des umgrenzenten Raumes die Reflektoren beziehungsweise Diffusoren umfaßt.

18. Vorrichtung nach Anspruch 17, **dadurch gekennzeichnet, daß**
die Reflektoren beziehungsweise Diffuseren derart ausgestaltet sind, daß mehr als 50 % der auf diese Flächen auftreffenden Strahlung reflektiert beziehungsweise gestreut werden.

19. Vorrichtung nach Anspruch 18, **dadurch gekennzeichnet, daß** die
Reflektoren bzw. Diffusoren derart ausgestaltet sind, daß mehr als 90 % bzw. 95 %, insbesondere mehr als 98 % der auf diese Flächen auftreffenden Strahlung reflektiert bzw. gestreut werden.

20. Vorrichtung nach einem der Ansprüche 15 bis 19, **dadurch gekennzeichnet, daß** die Reflektoren (3) beziehungsweise Diffusoren (3) eines oder Mischungen aus mehreren der nachfolgenden Materialien umfassen:
Al₂O₃; BaF₂; BaTiO₃; CaF₂; CaTiO₃;
MgO 3,5 Al₂O₃; MgO; SrF₂; SiO₂;
SrTiO₃; TiO₂; Quarzal; Spinell;
Cordierit; Cordierit-Sinterglaskeramik

21. Vorrichtung nach einem der Ansprüche 14 bis 20, **dadurch gekennzeichnet, daß** die Mittel zur Erzeugung von indirekt auf das Glas und/oder die Glaskeramik einwirkender Strahlung einen Trägerkörper umfassen, der in thermischem Kontakt mit den Gläsern beziehungsweise Glaskeramiken steht und einen Anteil der lnfrarot-Strahlung absorbiert.

22. Vorrichtung nach Anspruch 21, **dadurch gekennzeichnet, daß**
der Trägerkörper Keramikplatten umfaßt.

23. Vorrichtung nach Anspruch 21 oder 22, **dadurch gekennzeichnet, daß**
der Trägerkörper SiC, insbesondere SiSiC umfaßt.

24. Vorrichtung nach einem der Ansprüche 21 bis 23, **dadurch gekennzeichnet, daß** die Emissivität des Trägerkörpers größer als 0,5 ist.

25. Vorrichtung nach einem der Ansprüche 21 bis 24, **dadurch gekennzeichnet, daß** die Wärmeleitfähigkeit des Trägerkörpers im Bereich der Wärmebehandlungstemperatur mindestens fünf mal so groß ist, wie die des zu behandelnden Glases oder der Glaskeramik.

26. Verwendung einer Vorrichtung gemäß einem der Ansprüche 14 bis 25 zum schnellen, temperaturhomogenen Aufheizen von Glaskeramikrohlingen bei der Keramisierung.

27. Verwendung einer Vorrichtung gemäß einem der Ansprüche 14 bis 25 zum schnellen Wiedererwärmen von Glasrohlingen für eine nachfolgende Heißformgebung.

28. Verwendung einer Vorrichtung gemäß einem der Ansprüche 14 bis 25 zum Absenken von Gläsern und/oder Glaskeramiken.

29. Verwendung einer Vorrichtung gemäß einem der Ansprüche 14 bis 25 als Faserziehofen zur homogenen Erwärmung von Faserbündeln auf Ziehtemperatur.

30. Verwendung einer Vorrichtung gemäß einem der Ansprüche 14 bis 25 zur unterstützenden oder ausschließlichen Beheizung bei der Gemengeeinschmelzung.

31. Verwendung einer Vorrichtung gemäß einem der Ansprüche 14 bis 25 zum Schmelzen und Läutern von Gläsern und/oder Glaskeramiken.

32. Verwendung einer Vorrichtung gemäß einem der Ansprüche 14 bis 25 zur unterstützenden oder ausschließlichen Beheizung bei der Formgebung, insbesondere beim Ziehen, beim Walzen, beim Gießen, beim Schleudern, beim Pressen, beim Blasen beim Blas- Blas-Verfahren, beim Blasen beim Preß-Blas-Verfahren, beim Blasen beim Ribbon-Verfahren, zur Flachglasherstellung sowie beim Floaten.

33. Verwendung einer Vorrichtung gemäß einem der Ansprüche 14 bis 25, zur unterstützenden oder ausschließlichen Beheizung beim Kühlen,beim Verschmelzen, beim thermischen Verfestigen, beim Stabilisieren bzw. Feinkühlen zum Einstellen einer gewünschten fiktiven Temperatur, einer gewünschten Brechzahl, einer gewünschten Compaction bei anschließender Temperaturbehandlung, beim Altem von Thermometergläsern, beim Entmischen, beim Färben von Anlaufgläsern, beim gesteuerten Kristallisieren, beim Diffusionsbehandeln, insbesondere chemischen Verfestigen, beim Umformen, insbesondere Senken, Biegen, Verziehen, Verblasen, beim Trennen, insbesondere Abschmelzen, Brechen, Schränken, Sprengen, beim Schneiden, beim Fügen sowie beim Beschichten.

## Claims

1. Method for the homogeneous heating of semitransparent and/or transparent glasses and/or glass-ceramics using infrared radiation, with the result that the glasses and/or glass-ceramics are subjected to a heat treatment in the range from 20°C to 3000°C, in particular in the range from 20°C to 1705°C, the heating being achieved by a proportion of infrared radiation which acts directly on the glasses and/or glass-ceramic and a proportion of infrared radiation which acts indirectly on the glasses and/or glass-ceramic, the proportion of the radiation which acts indirectly on the glass and/or the glass-ceramics amounting to more than 50% of the total radiation output, and the infrared radiation being short-wave infrared radiation from an IR radiation source, the colour temperature of the IR radiation source being greater than 1500 K, particularly preferably greater than 2000 K.

2. Method according to Claim 1, **characterized in that** the infrared radiation which acts indirectly on the glasses and/or glass-ceramic comprises at least a proportion of reflected and/or scattered radiation.

3. Method according to one of Claims 1 to 2, **characterized in that** on average more than 50% of the total radiation output of short-wave infrared radiation which is emitted by the IR radiators is not absorbed when it impinges on the glass once.

4. Method according to one of Claims 1 to 3, **characterized in that** the method is carried out in a space which is bounded by wall, floor and ceiling, in particular an IR radiation cavity.

5. Method according to Claim 4, **characterized in that** the reflected and/or scattered infrared radiation is reflected and/or scattered by at least part of the wall, floor and/or ceiling surfaces.

6. Method according to Claim 5, **characterized in that** the proportion of the infrared radiation which is reflected and/or scattered by the part of the wall, floor and/or ceiling surfaces amounts to more than 50% of the radiation which impinges on these surfaces.

7. Method according to Claim 5, **characterized in that** the proportion of the infrared radiation which is reflected and/or scattered by the part of the wall, floor and/or ceiling surfaces amounts to more than 90%, or 95%, in particular more than 98%.

8. Method according to one of Claims 1 to 7, **characterized in that** the infrared radiation which acts indirectly on the glasses and/or glass-ceramics comprises a proportion of infrared radiation which is absorbed by a support body, converted into heat and emitted to the glass and/or glass-ceramic which is thermally connected to the support body.

9. Method according to Claim 8, **characterized in that** the heat is transferred to the glass and/or glass ceramic which is thermally connected to the support body via heat radiation and/or heat conduction and/or convection.

10. Method according to Claim 8 or 9, **characterized in that** ceramic plates are used as support bodies.

11. Method according to one of Claims 8 to 10, **characterized in that** the support bodies comprise SiC, in particular SiSiC.

12. Method according to one of Claims 8 to 11, **characterized in that** the emissivity of the support body is greater than 0.5.

13. Method according to one of Claims 8 to 12, **characterized in that** the thermal conductivity of the support body in the region of the heat treatment temperature is at least five times as great as that of the glass or glass ceramic which is to be treated.

14. Device for the homogeneous heating of semitransparent and/or transparent glasses and/or glass-ceramics using infrared radiation, with the result that the glasses and/or glass-ceramics are subjected to a heat treatment in the range from 20°C to 3000°C, in particular in the range from 20°C to 1705°C, having
14.1 infrared radiation sources (1) for emitting short-wave IR radiation, the colour temperature of the IR radiation source being greater than 1500 K, particularly preferably greater than 2000 K;
14.2 means for reflecting and/or scattering the infrared radiation from the infrared radiation sources which is not absorbed by the glasses and/or glass-ceramics and therefore for generating infrared radiation, which acts indirectly on the glasses and/or glass-ceramics, of the same wavelength as that of the infrared radiation sources; in which device
14.3 the means for reflecting and/or scattering the infrared radiation from the infrared radiation sources which is not absorbed by the glasses and/or glass-ceramics and therefore for generating infrared radiation, which acts indirectly on the glasses and/or glass-ceramics, of the same wavelength as that of the infrared radiation sources are arranged and provided in such a manner that the proportion of the radiation which acts indirectly on the glass and/or the glass-ceramic amounts to more than 50% of the total radiation output.

15. Device according to Claim 14, **characterized in that** the means for generating infrared radiation which acts indirectly on the glasses and/or glass-ceramics (5) comprise reflectors (3) or diffusers for reflecting or scattering infrared radiation.

16. Device according to one of Claims 14 to 15, **characterized in that** the device comprises a space which is bounded by walls, floor and ceiling, in particular an IR radiation cavity.

17. Device according to Claim 16, **characterized in that** the surface of the walls and/or of the floor and/or of the ceiling of the bounded space comprises the reflectors or diffusers.

18. Device according to Claim 17, **characterized in that** the reflectors or diffusers are configured in such a manner that more than 50% of the radiation which is incident on these surfaces is reflected or scattered.

19. Device according to Claim 18, **characterized in that** the reflectors or diffusers are configured in such a manner that more than 90% or 95%, in particular more than 98% of the radiation which impinges on these surfaces is reflected or scattered.

20. Apparatus according to one of Claims 15 to 19, **characterized in that** the reflectors (3) or diffusers (3) comprise one or mixtures of a plurality of the following materials:
Al₂O₃; BaF₂; BaTiO₃; CaF₂; CaTiO₃;
MgO; 3.5 Al₂O₃; MgO; SrF₂; SiO₂;
SrTiO₃; TiO₂; Quarzal; spinel;
cordierite; cordierite-sintered glass ceramic.

21. Device according to one of Claims 14 to 20, **characterized in that** the means for generating radiation which acts indirectly on the glass and/or the glass-ceramic comprise a support body which is in thermal contact with the glasses or glass-ceramics and absorbs a proportion of the infrared radiation.

22. Device according to Claim 21, **characterized in that** the support body comprises ceramic plates.

23. Device according to Claim 21 or 22, **characterized in that** the support body comprises SiC, in particular SiSiC.

24. Device according to one of Claims 21 to 23, **characterized in that** the emissivity of the support body is greater than 0.5.

25. Device according to one of Claims 21 to 24, **characterized in that** the thermal conductivity of the support body in the region of the heat treatment temperature is at least five times as great as that of the glass or glass-ceramic which is to be treated.

26. Use of a device according to one of Claims 14 to 25 for the rapid, temperature-homogeneous heating of glass-ceramic blanks during ceramicization.

27. Use of a device according to one of Claims 14 to 25 for rapidly reheating glass blanks for subsequent hot-shaping.

28. Use of a device according to one of Claims 14 to 25 for recessing glasses and/or glass-ceramics.

29. Use of a device according to one of Claims 14 to 25 as a fibre-drawing furnace for homogeneously heating fibre bundles to the drawing temperature.

30. Use of a device according to one of Claims 14 to 25 for the auxiliary or exclusive heating during the melting of the batch.

31. Use of a device according to one of Claims 14 to 25 for melting and refining glasses and/or glass-ceramics.

32. Use of a device according to one of Claims 14 to 25 for auxiliary or exclusive heating during shaping, in particular during drawing, during rolling, during casting, during spinning, during pressing, during blowing in the blow-blow process, during blowing in the press-blow process, during blowing in the ribbon process, for producing flat glass and during the float process.

33. Use of a device according to one of Claims 14 to 25 for auxiliary or exclusive heating during cooling, during melting, during thermal consolidation, during stabilization or precision cooling in order to set a desired nominal temperature, a desired refractive index, a desired compaction with subsequent heat treatment, during ageing of thermometer glasses, during segregation, during colouring of flash glasses, during controlled crystallization, during diffusion treatment, in particular chemical consolidation, during deforming, in particular recessing, bending, distorting, blowing, during separation, in particular fusion separation, braking, cracking-off, blasting, during cutting, during joining and during coating.

## Revendications

1. Procédé pour le chauffage homogène de verres et/ou de vitrocéramiques semi-transparent(e)s et/ou transparent(e)s à l'aide d'un rayonnement infrarouge, par lequel les verres et/ou les vitrocéramiques sont soumis(es) à un traitement thermique dans la gamme de 20°C à 3000°C, en particulier dans la gamme de 20°C à 1705°C, dans lequel le chauffage est obtenu par une fraction d'un rayonnement infrarouge agissant directement sur les verres et/ou sur les vitrocéramiques ainsi que par une fraction d'un rayonnement infrarouge agissant indirectement sur les verres et/ou sur les vitrocéramiques, dans lequel la partie du rayonnement infrarouge agissant indirectement sur les verres et/ou sur les vitrocéramiques vaut plus de 50 % de la puissance de rayonnement totale et le rayonnement infrarouge est un rayonnement infrarouge de courte longueur d'onde d'une source de rayonnement infrarouge, dans lequel la température de couleur de la source de rayonnement infrarouge est supérieure à 1500 K, en particulier de préférence supérieure à 2000 K.

2. Procédé suivant la revendication 1, **caractérisé en ce que** le rayonnement infrarouge agissant indirectement sur les verres et/ou sur les vitrocéramiques comprend au moins une fraction de rayonnement réfléchi et/ou dispersé.

3. Procédé suivant l'une des revendications 1 à 2, **caractérisé en ce qu'**en moyenne, plus de 50 % de la puissance de rayonnement totale émise par les émetteurs IR en rayonnement infrarouge de courte longueur d'onde ne sont pas absorbés lors d'un impact unique sur le verre.

4. Procédé suivant l'une quelconque des revendications 1 à 3, **caractérisé en ce que** le procédé est mis en oeuvre dans une enceinte fermée, avec paroi, fond et couvercle, en particulier dans une cavité de rayonnement infrarouge.

5. Procédé suivant la revendication 4, **caractérisé en ce que** le rayonnement infrarouge réfléchi et/ou dispersé est réfléchi et/ou dispersé par au moins une partie des surfaces de la paroi, du fond et/ou du couvercle.

6. Procédé suivant la revendication 5, **caractérisé en ce que** la fraction du rayonnement infrarouge réfléchie et/ou dispersée par la partie des surfaces de la paroi, du fond et/ou du couvercle vaut plus de 50 % du rayonnement frappant ces surfaces.

7. Procédé suivant la revendication 5, **caractérisé en ce que** la fraction du rayonnement infrarouge réfléchie et/ou dispersée par la partie des surfaces de la paroi, du fond et/ou du couvercle vaut plus de 90 %, respectivement 95 %, en particulier plus de 98 %.

8. Procédé suivant l'une quelconque des revendications 1 à 7, **caractérisé en ce que** le rayonnement infrarouge agissant indirectement sur les verres et/ou sur les vitrocéramiques comprend une fraction de rayonnement infrarouge, qui est absorbée par un corps de support, transformée en chaleur et cédée au verre et/ou à la vitrocéramique thermiquement couplé(e) au corps de support.

9. Procédé suivant la revendication 8, **caractérisé en ce que** la chaleur est transférée au verre et/ou à la vitrocéramique thermiquement couplé(e) au corps de support par rayonnement thermique et/ou par conduction thermique et/ou par convection.

10. Procédé suivant la revendication 8 ou 9, **caractérisé en ce que** l'on utilise des plaques de céramique comme corps de support.

11. Procédé suivant l'une quelconque des revendications 8 à 10, **caractérisé en ce que** les corps de support contiennent du Sic, en particulier du SiSiC.

12. Procédé suivant l'une quelconque des revendications 8 à 11, **caractérisé en ce que** l'émissivité du corps de support est supérieure à 0,5.

13. Procédé suivant l'une quelconque des revendications 8 à 12, **caractérisé en ce que** la conductibilité thermique du corps de support dans la gamme de température du traitement thermique est au moins cinq fois plus grande que celle du verre à traiter et/ou de la vitrocéramique.

14. Dispositif pour le chauffage homogène de verres et/ou de vitrocéramiques semi-transparent(e)s et/ou transparent(e)s à l'aide d'un rayonnement infrarouge, par lequel les verres et/ou les vitrocéramiques sont soumis(es) à un traitement thermique dans la gamme de 20°C à 3000°C, en particulier dans la gamme de 20°C à 1705°C, avec
14.1 des sources de rayonnement infrarouge (1) pour l'émission de rayonnement infrarouge de courte longueur d'onde, dans lequel la température de couleur est supérieure à 1500 K, en particulier de préférence supérieure à 2000 K;
14.2 des moyens pour réfléchir et/ou pour disperser le rayonnement infrarouge des sources de rayonnement infrarouge non absorbé par les verres et/ou les vitrocéramiques et ainsi pour produire un rayonnement infrarouge agissant indirectement sur les verres et/ou sur les vitrocéramiques, de la même longueur d'onde que celle des sources de rayonnement infrarouge; dans lequel
14.3 les moyens pour réfléchir et/ou pour disperser le rayonnement infrarouge des sources de rayonnement infrarouge non absorbé par les verres et/ou les vitrocéramiques et ainsi pour produire un rayonnement infrarouge agissant indirectement sur les verres et/ou sur les vitrocéramiques, de la même longueur d'onde que celle des sources de rayonnement infrarouge, sont disposés et constitués de telle manière que la fraction du rayonnement agissant indirectement sur les verres et/ou sur les vitrocéramiques vaille plus de 50 % de la puissance de rayonnement totale.

15. Dispositif suivant la revendication 14, **caractérisé en ce que** les moyens pour produire un rayonnement infrarouge agissant indirectement sur les verres et/ou sur les vitrocéramiques (5) comprennent des réflecteurs (3) ou des diffuseurs pour la réflexion, respectivement la dispersion, du rayonnement infrarouge.

16. Dispositif suivant l'une des revendications 14 à 15, **caractérisé en ce que** le dispositif comprend une enceinte fermée, avec des parois, un fond et un couvercle, en particulier une cavité de rayonnement infrarouge.

17. Dispositif suivant la revendication 16, **caractérisé en ce que** la surface des parois et/ou du fond et/ou du couvercle de l'enceinte fermée comprend les réflecteurs, respectivement les diffuseurs.

18. Dispositif suivant la revendication 17, **caractérisé en ce que** les réflecteurs, respectivement les diffuseurs, sont configurés de telle manière que plus de 50 % du rayonnement frappant ces surfaces soient réfléchis, respectivement dispersés.

19. Dispositif suivant la revendication 18, **caractérisé en ce que** les réflecteurs, respectivement les diffuseurs, sont configurés de telle manière que plus de 90 % respectivement 95 %, en particulier plus de 98 %, du rayonnement frappant ces surfaces soient réfléchis, respectivement dispersés.

20. Dispositif suivant l'une quelconque des revendications 15 à 19, **caractérisé en ce que** les réflecteurs (3), respectivement les diffuseurs (3), comprennent un des matériaux suivants ou des mélanges de plusieurs de ceux-ci:
Al₂O₃; BaF₂; BaTiO₃; CaF₂; CaTiO₃;
MgO·3,5 Al₂O₃; MgO; SrF₂; SiO₂;
SrTiO₃; TiO₂; quarzal; spinelle;
cordiérite; céramique cordiérite-verre fritté.

21. Dispositif suivant l'une quelconque des revendications 14 à 20, **caractérisé en ce que** les moyens pour produire un rayonnement agissant indirectement sur le verre et/ou sur la vitrocéramique comprennent un corps de support, qui est en contact thermique avec les verres, respectivement avec les vitrocéramiques, et qui absorbe une fraction du rayonnement infrarouge.

22. Dispositif suivant la revendication 21, **caractérisé en ce que** le corps de support comprend des plaques de céramique.

23. Dispositif suivant la revendication 21 ou 22, **caractérisé en ce que** le corps de support comprend du SiC, en particulier du SiSiC.

24. Dispositif suivant l'une des revendications 21 à 23, **caractérisé en ce que** l'émissivité du corps de support est supérieure à 0,5.

25. Dispositif suivant l'une quelconque des revendications 21 à 24, **caractérisé en ce que** la conductibilité thermique du corps de support dans le domaine de température du traitement thermique est au moins cinq fois plus grande que celle du verre à traiter ou de la vitrocéramique.

26. Utilisation d'un dispositif suivant l'une quelconque des revendications 14 à 25 pour le chauffage rapide à température homogène d'ébauches de vitrocéramique lors de la céramisation.

27. Utilisation d'un dispositif suivant l'une quelconque des revendications 14 à 25 pour le réchauffage rapide d'ébauches de verre en vue d'un formage à chaud ultérieur.

28. Utilisation d'un dispositif suivant l'une quelconque des revendications 14 à 25 pour le ramollissage de verres et/ou de vitrocéramiques.

29. Utilisation d'un dispositif suivant l'une quelconque des revendications 14 à 25 comme four d'étirage de fibres pour le chauffage homogène de faisceaux de fibres à la température d'étirage.

30. Utilisation d'un dispositif suivant l'une quelconque des revendications 14 à 25 pour le chauffage complémentaire ou exclusif lors de la fusion de frittes.

31. Utilisation d'un dispositif suivant l'une quelconque des revendications 14 à 25 pour la fusion et l'affinage de verres et/ou de vitrocéramiques.

32. Utilisation d'un dispositif suivant l'une quelconque des revendications 14 à 25 pour le chauffage complémentaire ou exclusif lors du formage, en particulier lors de l'étirage, lors du laminage, lors de la coulée, lors de la centrifugation, lors du pressage, lors du soufflage dans le procédé soufflé-soufflé, lors du soufflage dans le procédé pressé-soufflé, lors du soufflage dans le procédé au ruban, pour la fabrication de verre plat ainsi que lors du flottage.

33. Utilisation d'un dispositif suivant l'une quelconque des revendications 14 à 25, pour le chauffage complémentaire ou exclusif lors du refroidissement, lors de la fusion, lors de la consolidation thermique, lors de la stabilisation respectivement du refroidissement fin pour le réglage d'une température fictive désirée, d'un indice de réfraction désiré, d'une compacité désirée lors d'un traitement thermique consécutif, lors du vieillissement de verres de thermomètre, lors de la ségrégation, lors de la coloration de verres d'approche, lors de la cristallisation contrôlée, lors du traitement de diffusion, en particulier la consolidation chimique, lors de la déformation, en particulier le ramollissage, le cintrage, l'étirage, le soufflage, lors de la séparation, en particulier la fusion, la rupture, le croisage, la fragmentation, lors de la coupe, lors de l'assemblage ainsi que lors du revêtement.
